# EUROPÄISCHE PATENTANMELDUNG

(11) **EP 2 173 003 A1**
(43) Veröffentlichungstag der Anmeldung: **07.04.2010**
(21) Anmeldenummer: 09011970.2
(22) Anmeldetag: 21.09.2009
(51) Int. Cl.: H01M 10/44, H01M 10/48, H01M 10/50

(54) **Verfahren zum Betrieb eines Flurförderzeugs mit einer Batterieeinheit**

(30) Priorität: 02.10.2008 DE 102008050398
(71) Anmelder: Jungheinrich Aktiengesellschaft, 22047 Hamburg (DE)
(72) Erfinder: Kröger, Hennig, 23845 Itzstedt (DE); Rautmann, Jürgen, 24558 Henstedt-Ulzburg (DE); Taube, Stephan, 22846 Norderstedt (DE)
(74) Vertreter: Schildberg, Peter

(57) **Zusammenfassung**

Verfahren zum Betreiben eines Flurförderzeugs mit einer Batterieeinheit, die eine Steuereinheit und mindestens einen Sensor zur Erfassung einer Zustandsgröße der Batterieeinheit aufweist,
**dadurch gekennzeichnet, dass**
- die Steuereinheit mindestens einen Messwert eines Sensors ausliest und
- unter Verwendung des Messwertes einen Kennwert bestimmt, der für einen an die Batterieeinheit angeschlossenen Verbraucher einen maximalen Entnahmestrom und/oder für ein an die Batterieeinheit angeschlossenes Ladegerät einen maximalen Ladestrom angibt.

## Beschreibung

Die vorliegende Erfindung betrifft ein Verfahren zum Betrieb eines Flurförderzeugs mit einer Batterieeinheit.

Bei Flurförderzeugen werden Batterien mit unterschiedlicher Technologie eingesetzt. Die Batterieeinheit des Flurförderzeugs besitzt eine Batterie und eine dieser zugeordneten Steuereinheit. Die Steuereinheit der Batterie kann Daten und Steuerbefehle mit einer übergeordneten Steuereinheit des Flurförderzeugs austauschen. Ebenfalls ist es möglich, dass die Steuereinheit der Batterieeinheit mit einem Ladegerät und dessen Steuereinheit Daten austauscht.

Aus den VDI-Richtlinien VDI 4463, "Batteriecontrolling im Fuhrparkmanagement" vom August 2007 sind eine Reihe von Einsatzmöglichkeiten für ein Batteriecontrolling bekannt. Hierzu gehören eine Batterieüberwachung bei Entladung und Ladung der Batterie, eine Ladegerätsteuerung, Batterieservice mit einer Bewertung des Batteriezustandes, ein Batteriemanagement und eine Abschätzung der Batterierestlebensdauer. Im Hinblick auf den Datenaustausch zwischen der Steuereinheit der Batterie und dem Ladegerät wird vorgeschlagen, beim Ladevorgang die korrekte Ladekennlinie und den richtigen Ladefaktor abhängig von der an der das Ladegerät angeschlossenen Batterie zu wählen. Ferner ist bekannt, Batteriekenn- und -nenndaten, wie Kapazität, Spannung, Batterietyp und einzustellender Ladefaktor, zu dem Ladegerät zu übertragen, um eine Anpassung der Ladegeräteinstellung vorzunehmen. Ebenfalls ist angesprochen, die Daten der Batterie, wie beispielsweise Batterietemperatur und erfolgte Tiefentladungen, von dem Ladegerät zur Anpassung des Ladevorgangs an den aktuellen Batteriezustand zu berücksichtigen.

Der Erfindung liegt die Aufgabe zu Grunde, ein Verfahren zum Betrieb einer Batterieeinheit bereitzustellen, das mit einfachen Mitteln erlaubt, die Batterie zu jedem Zeitpunkt in einem für die Funktion und Lebensdauer der Batterie optimalen Zustand zu betreiben.

Erfindungsgemäß wird die Aufgabe durch ein Verfahren mit den Merkmalen aus Anspruch 1 gelöst. Vorteilhafte Ausgestaltungen des erfindungsgemäßen Verfahrens bilden die Gegenstände der Unteransprüche.

Das erfindungsgemäße Verfahren dient zum Betrieb einer Batterieeinheit für ein Flurförderzeug. Die Batterieeinheit besteht aus einer Batterie, einer Steuereinheit und mindestens einem Sensor. Der Sensor dient zur Erfassung mindestens einer Zustandsgröße der Batterie. Bei dem erfindungsgemäßen Verfahren liest die Steuereinheit in der Batterieeinheit einen Messwert des mindestens einen Sensors aus und bestimmt unter Verwendung des ausgelesenen Messwerts einen Kennwert, der für einen an die Batterieeinheit angeschlossenen elektrischen Verbraucher einen maximalen Entladestrom und/oder für ein an die Batterieeinheit angeschlossenes Ladegerät einen maximalen Ladestrom angibt. Das erfindungsgemäße Verfahren greift für den Betrieb der Batterieeinheit, also für die Leistungsentnahme aus der Batterie und für das Wiederaufladen der Batterie, auf lokal an der Batterie gewonnene Messwerte zurück, die Aufschluss über den Zustand der Batterie geben. Bei dem erfindungsgemäßen Verfahren werden die gewonnenen Messwerte lokal in der Steuereinheit der Batterieeinheit ausgewertet und aus diesen Messwerten wird ein Kennwert für den Betrieb der Batterieeinheit bestimmt.

Der jeweils bestimmte Kennwert erlaubt es, die Batterie schonend zu betreiben und so Schädigungen der Batterie zu vermeiden. Indem zu große Belastungen oder ein Weiterbetrieb der Batterie bei ungünstigen Zustandbedingungen vermieden wird, wird die Lebensdauer der Batterie deutlich verlängert.

In einer bevorzugten Ausgestaltung weist die Steuereinheit der Batterie mindestens zwei Sensoren auf, deren Messwerte ausgelesen und aus deren Messwerten der Kennwert bestimmt wird. Bei der bevorzugten Ausgestaltung wird der Kennwert, der einem angeschlossenen elektrischen Verbraucher einen maximalen Entladestrom und/oder einem angeschlossenen Ladegerät einen maximalen Ladestrom vorgibt, aufgrund von zwei Messwerten bestimmt, die durch zwei Sensoren erfasst wurden. Hierbei wird aus jedem Messwert eine Zustandsgröße bestimmt, die dann der Bestimmung des Kennwerts zugrunde liegen. Versuche haben gezeigt, dass bei der Verarbeitung von Messwerten zweier Sensoren Kennwerte für den Betrieb der Batterie deutlich besser an die Batterie angepasst generiert werden können als bei Verfahren, bei denen nur auf einen Messwert zurückgegriffen wird.

In einer bevorzugten Ausgestaltung ist ein erster Sensor als Temperatursensor ausgebildet, der die Temperatur der Batterie misst. Die Temperatur ist für viele Anwendungen der Batterie eine wichtige Größe, die hilft den Zustand der Batterie richtig einzuschätzen, somit die maximalen Entnahmeströme bzw. die maximalen Ladeströme der Batterie festzulegen.

In einer bevorzugten Ausgestaltung der Erfindung wird der Kennwert abhängig von der gemessenen Temperatur und mindestens einer weiteren Zustandsgröße bestimmt. Für die weitere Zustandsgröße kann der Füllstand der Batterie herangezogen werden. Der Füllstand der Batterie wird über einen Füllstandssensor an der Batterie gemessen, wobei mit zunehmender Reduzierung des Füllstands der Batterie der Kennwert angezeigt, dass der maximale Entnahmestrom und/oder der maximale Ladestrom zu reduzieren ist. Bei der Abhängigkeit der Werte für den maximalen Entnahmestrom und den maximalen Ladestrom ergibt sich der Zusammenhang, dass bei ein und derselben Temperatur mit abnehmendem Füllstand der Batterie zunehmend die Werte für den maximalen Entnahmestrom und den maximalen Ladestrom reduziert werden. Hinzu kommt, dass die Werte bei ein und demselben Füllstand der Batterie von der Temperatur der Batterie anhängen, wobei mit zunehmender Temperatur die Werte für den maximalen Entnahmestrom und den maximalen Ladestrom konstant bleiben oder fallen.

In einer ebenfalls bevorzugten Ausgestaltung kann als weitere Zustandsgröße die Zwischenspannung herangezogen werden. Die Zwischenspannung zeigt an, ob beide Gruppen von Zellen die gleiche Spannung besitzen. In der Ausgestaltung der Erfindung wird mit zunehmendem Betrag der Zwischenspannung ein Kennwert generiert, der anzeigt, dass der maximale Entnahmestrom und/oder der maximale Ladestrom mit zunehmendem Betrag der Zwischenspannung zu reduzieren ist. Auf diese Weise wird die Batterie, bei der eine Zwischenspannung auftritt, durch den Entnahmestrom bzw. den Ladestrom weniger stark belastet.

In einer weiteren vorteilhaften Ausgestaltung des erfindungsgemäßen Verfahrens wird als weitere Zustandsgröße die Anzahl der Zwischenladungen der Batterie herangezogen. Die Zahl der Zwischenladungen kann nicht unmittelbar durch einen Strom/Spannungs-Sensor gemessen werden, wird aber als Zustandsgröße aus Messwerten des Sensors bestimmt. Bei dieser Ausgestaltung des erfindungsgemäßen Verfahrens wird mit zunehmender Anzahl an Zwischenladungen ein Kennwert generiert, der anzeigt, dass der maximale Entnahmestrom und/oder der maximale Ladestrom zu reduzieren ist. Es wird also eine Batterie, die eine große Anzahl von Zwischenladungen erfahren hat, nur mit einem kleineren maximalen Entnahmestrom und/oder maximalen Ladestrom belastet als eine vergleichbare Batterie, die weniger oder überhaupt keine Zwischenladungen erfahren hat.

In einer weiteren Ausgestaltung des erfindungsgemäßen Verfahrens ist für die Temperatur der Batterie ein Maximalwert vorgesehen, bei dessen Überschreiten der Kennwert zeigt, dass keine Be- und/oder Entladungen der Batterie erfolgt. Der Kennwert anzeigt somit an, dass der maximale Entnahme- oder maximale Ladestrom auf Null zu reduzieren ist. Auf diese Weise wird sichergestellt, dass eine zu stark erhitzte Batterie nicht weiter verwendet wird.

In einer besonders bevorzugten Weiterführung des erfindungsgemäßen Verfahrens wird auch für die weitere Zustandsgröße ein vorbestimmter Grenzwert definiert, bei dessen Überschreiten der Kennwert anzeigt, dass keine Be- und/oder Entladung der Batterie erfolgt. Auf diese Weise wird sichergestellt, dass eine Batterie, deren Füllstand zu niedrig ist oder die zu viele Zwischenladungen erfahren hat oder deren Zwischenspannung zu groß ist, nicht weiter eingesetzt werden darf.

In einer zweckmäßigen Weiterführung des erfindungsgemäßen Verfahrens generiert die Steuereinheit ein Fehlersignal, wenn der Maximalwert der Temperatur und/oder der Grenzwert der weiteren Zustandsgröße überschritten wird. Das Fehlersignal wird an ein mit der Batterieeinheit verbundenes Ladegerät und/oder Flurförderzeug übertragen und für einen Benutzer angezeigt. Auf diese Weise kann der Fahrzeugführer über den kritischen Zustand der Batterie informiert werden.

Auch kann vorgesehen sein, dass ansprechend auf das Fehlersignal, das Flurförderzeug zu einer definierten Zeit stillgelegt wird. Die definierte Zeit kann dabei entweder durch ein Ereignis definiert sein oder nach Ablauf einer vordefinierten Zeitdauer vorliegen. Die automatische Stilllegung des Flurförderzeugs nach einer gegebenenfalls erfolgten Vorankündigung stellt sicher, dass das Flurförderzeug nicht dauerhaft mit einer Batterie betrieben wird, bei der eine der Zustandsgrößen kritisch ist.

Neben der bereits angesprochenen Überschreitung einer Maximaltemperatur kann der Temperatursensor bei dem erfindungsgemäßen Verfahren auch dazu eingesetzt werden, eine Batterietemperatur zu erfassen und mit einem vorbestimmten Minimalwert für die Temperatur der Batterie zu vergleichen. Bei Unterschreiten des vorbestimmten Minimalwerts der Batterietemperatur wird von der Steuereinheit ein Kennwert für einen erhöhten Ladestrom generiert. Der erhöhte Ladestrom ermöglicht es, die Temperatur der Batterie zu erhöhen und so sicherzustellen, dass im Verlauf des Ladevorgangs die Temperatur der Batterie durch den erhöhten Ladestrom wieder erhöht wird. Der Temperatursensor zur Erfassung der Temperatur der Batterie für eine zu niedrige Batterietemperatur kann mit dem Temperatursensor zur Erkennung einer überhöhten Temperatur der Batterie identisch sein. Ebenfalls kann wieder eine weitere Zustandsgröße überwacht und bei der Bestimmung des Kennwerts berücksichtigt werden.

In einer weiteren ebenfalls bevorzugten Ausgestaltung vergleicht die Steuereinheit den gemessenen Spannungswert mit einem zweiten Grenzwert (G2). Bei Überschreiten des zweiten Grenzwertes (G2) generiert die Steuereinheit einen Kennwert, der der Steuereinheit eines Ladegeräts einen zusätzlichen Ladebedarf der Batterie anzeigt.

Um dem erhöhten Ladebedarf der Batterie nachzukommen, kann bei dem erfindungsgemäßen Verfahren auch vorgesehen sein, dass ein Ladegerät die Batterieeinheit für eine vorbestimmte Zeitdauer mit einem konstanten Ladestrom beaufschlagt. Der konstante Ladestrom stellt sicher, dass eine ausreichende Ladung der Batterie erfolgt.

In einer bevorzugten Weiterführung des erfindungsgemäßen Verfahrens wird ein Sensor zur Messung der Füllstandshöhe in der Batterie eingesetzt. Die Steuereinheit vergleicht die gemessene Füllstandshöhe mit einem Referenzwert für die Füllstandshöhe und generiert bei Unterschreiten des Referenzwertes ein Fehlersignal für die Füllstandshöhe. Bei gleichzeitiger Überwachung der Batterie mit zwei oder mehr Sensoren können die erfassten Messwerte einzeln mit Referenzwerten verglichen und die Vergleichsergebnisse logisch miteinander verknüpft werden. Die Überwachung der Füllstandshöhe stellt sicher, dass das Flurförderzeug mit einer stets ausreichend gefüllten Batterie betrieben wird. Dadurch wird die Lebensdauer der Batterie ganz wesentlich verlängert und die Zuverlässigkeit der Batterie deutlich erhöht.

In einer bevorzugten Weiterführung des erfindungsgemäßen Verfahrens wird ansprechend auf das Fehlersignal zur Füllstandshöhe sichergestellt, dass das Flurförderzeug zu einem Zeitpunkt stillgelegt wird. Bei dem Zeitpunkt kann es sich wieder um ein Ereignis oder um eine Zeitdauer handeln, die das Stilllegen des Flurförderzeugs auslösen. Durch das Stilllegen wird sichergestellt, dass ein zu langer Betrieb des Flurförderzeuges mit einer nicht ausreichend gefüllten Batterie vermieden wird.

In einer weiteren bevorzugten Ausgestaltung der Erfindung werden ein während eines Ladevorgangs in die Batterieeinheit eingebrachter Ladestrom und/oder die Ladespannung erfasst. Die Steuereinheit der Batterie ermittelt aus den Messwerten für den Ladestrom und/oder die Ladespannung, ob ein vollständiger Ladevorgang oder ob ein Zwischenladevorgang an der Batterie durchgeführt wurde. Die Überwachung der Ladevorgänge stellt sicher, dass in der Steuereinheit der Batterie stets Informationen vorliegen, ob und wie vollständig ein Ladevorgang in der Vergangenheit durchgeführt wurde.

In einer bevorzugten Ausgestaltung weist die Steuereinheit einen Zähler auf, in dem die Anzahl der Zwischenladevorgänge seit dem letzten vollständigen Ladevorgang gezählt wird. Die Steuereinheit generiert einen Kennwert für ein an die Batterie angeschlossenes Ladegerät, der anzeigt, dass frühere Ladevorgänge nicht vollständig erfolgt sind. Die Überwachung der Teilladevorgänge ermöglicht es, eine Batterieeinheit nicht zu häufig Teilladevorgängen auszusetzen, wodurch die Lebensdauer der Batterie verkürzt würde. Der Zähler, mit dem in der Steuereinheit die Anzahl der Teilladevorgänge gespeichert werden, wird vorzugsweise auf Null zurückgesetzt, wenn eine vollständige Ladung erfolgt ist.

Das erfindungsgemäße Verfahren wird nachfolgend an einem Ausführungsbeispiel näher erläutert.

Es zeigt:
- Fig. 1: eine schematische Ansicht einer Batterieeinheit,
- Fig. 2: den Nennstrom abhängig von der Temperatur der Batterie und deren Füllstand,
- Fig. 3: den Nennstrom der Batterie abhängig von der Temperatur und der Anzahl der Zwischenladungen und
- Fig. 4: den Nennstrom der Batterie abhängig von der Temperatur der Batterie und der Zwischenspannungen.

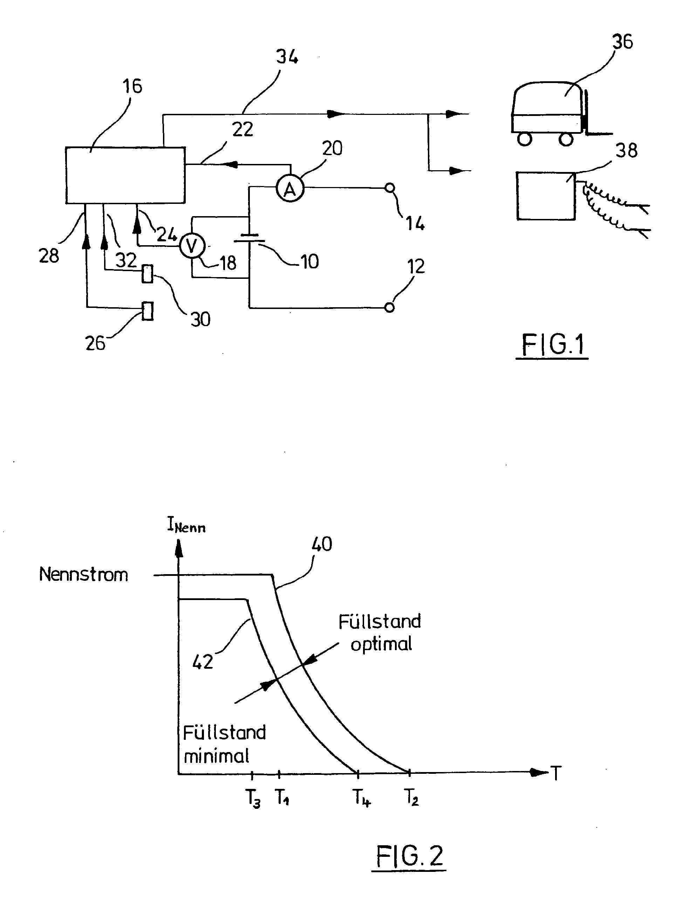

Fig. 1 zeigt eine Batterie 10 mit zwei schematisch dargestellten Anschlüssen 12 und 14. Ferner zeigt Fig. 1 eine Steuereinheit 16, die schematisch als ein Block dargestellt ist. Parallel zur Batterie 10 ist ein Spannungsmessgerät 18 geschaltet, das in der dargestellten Ausführungsform die Klemmspannung der Batterie misst. Zusätzlich zu dem dargestellten Spannungsmessgerät 18 können weitere Spannungsmesser vorgesehen seien, die die Spannung an einzelnen Batteriezellen erfassen. Das Amperemeter 20 misst den aus der Batterie 10 entnommenen Strom oder, falls die Batterie an ein Ladegerät angeschlossen ist, misst das Amperemeter 20 den in die Batterie fließenden Ladestrom. Die gemessenen Werte für Strom und Spannung liegen über die Anschlüsse 22 und 24 an der Steuereinheit 16 an.

Ebenfalls zeigt Fig. 1 einen Sensor 26 in einer schematischen Darstellung, der die Temperatur der Batterie misst. Der gemessene Temperaturwert liegt über den Anschluss 28 an der Steuereinheit an. Ein schematisch dargestellter Sensor 30 misst die Füllstandshöhe an der Batterie. Die gemessene Füllstandshöhe liegt über den Anschluss 32 an der Steuereinheit 16 an.

Die Steuereinheit 16 der Batterie erfasst kontinuierlich oder in zeitlichen Abständen die Batterietemperatur mit Hilfe eines Temperatursensors 26, der sich innerhalb der Batterie befindet. Sobald die Batteriesteuereinheit 16 erkennt, dass eine zu hohe Batterietemperatur vorliegt, wird ein Kennwert von der Steuereinheit 16 generiert. Über die Datenverbindung 34 liegt dieser an einer Steuereinheit des Flurförderzeugs an, die ansprechend auf den Kennwert eine Reduzierung der Fahrzeugbeschleunigung und/oder der Hubgeschwindigkeit auslöst. Bei der Datenverbindung 34 kann es sich um eine leitungsgebundene oder eine funkgebundene Verbindung handeln. Durch diese Reduktion wird sichergestellt, dass das Flurförderzeug 36 nicht zu hohe Ströme aus der Batterie entnimmt und so sich die Temperatur der Batterie weiter erhöht. Ferner können in der Steuerung des Flurförderzeuges voreingestellte zulässige Fahr- und Hubprogrammparameter ansprechend auf den anliegenden Kennwert verändert oder ausgewählt werden, um ebenfalls die Stromentnahme aus der Batterie zu begrenzen und so die Temperatur nicht weiter zu erhöhen. Liegt das von der Steuereinheit 16 generierte Signal über die Datenverbindung 34 an einem Ladegerät 38 an, so löst die zu hohe Batterietemperatur eine Temperaturbegrenzung während des Ladevorgangs aus. Zur Temperaturbegrenzung werden entsprechende Parameter der Ladekennlinie reduziert, insbesondere kann der maximale Wert des Ladestroms reduziert werden.

Stellt die Steuereinheit 16 über den Temperatursensor fest, dass die Temperatur der Batterie zu niedrig ist, wird zur Erwärmung der Batterie die Ladestromhöhe von dem angeschlossenen Ladegerät 38 beeinflusst. Durch die Beeinflussung der Stromhöhe, insbesondere durch die Erhöhung des Ladestroms, wird dafür gesorgt, dass die Temperatur des Elektrolyten in der Batterie sich erhöht und für die Ladung der Batterie sich im optimalen Bereich befindet. Insbesondere bei Flurförderzeugen, die beispielsweise im Kühlhaus eingesetzt werden, erweist sich die Erhöhung der Elektrolyttemperatur durch den Ladestrom als besonders vorteilhaft zur Verlängerung der Lebensdauer.

Die über das Voltmeter 18 gemessenen Spannungswerte der Batterie erlauben es der Steuereinheit 16, einen Defekt innerhalb der Batterie oder einer der Batteriezellen zu erkennen. Wird der Grenzwert (G1) für einen Spannungswert überschritten, so wird ein Fehlersignal generiert und zur Anzeige auf dem Ladegerät 38 bzw. dem Flurförderzeug 36 gebracht. Zusätzlich wird ein Zeitzähler gestartet, der das Fahrzeug nach einer benutzerseitig einstellbaren Zeitdauer stilllegt. Eine benutzerseitig eingestellte Zeitdauer kann beispielsweise die Zeitdauer bis zum Ende der aktuell laufenden Betriebsphase sein. Wird ein Defekt der Batterie festgestellt, kann zusätzlich vorgesehen sein, dass ein erneutes Laden oder Entladen der Batterie gesperrt wird, bis beispielsweise der entsprechende Defekt behoben ist.

Überschreiten die gemessenen Spannungswerte einen zweiten Grenzwert (G2), der bevorzugt kleiner als der erste Grenzwert (G1) ist, beispielsweise G2=0,25 x G1, so veranlasst die Batteriesteuereinheit 16 im Anschluss an den nächsten regulären Ladevorgang eine Ausgleichsladung mit einem konstanten, reduzierten Ladestrom für eine festgelegte Dauer. Beispielsweise kann die Ausgleichsladung als zusätzliche Ladung mit reduziertem Strom für eine Zeitdauer von 2 Stunden erfolgen.

Die Erkennung eines ausreichend hohen Elektrolytstands erfolgt über den Sensor 30, der in den Batteriezellen angeordnet ist. Die Auswertung des Sensors 30, dessen Ausgang in Anschluss 32 an der Batteriesteuereinheit anliegt, erfolgt vorzugsweise vor dem Start eines Ladevorgangs. So kann sichergestellt sein, dass eine Batterie mit einem zu niedrigen Elektrolytstand nicht einen Ladevorgang durchläuft.

Unterschreiten die gemessenen Werte des Sensors 30 die angegebene Referenzhöhe für das Elektrolyt in der Batterie, wird ein Fehlersignal von der Steuereinheit 16 generiert und zur Anzeige auf der Batteriesteuereinheit, dem Flurförderzeug und/oder dem Ladegerät gebracht. Zusätzlich generiert die Steuereinheit ein Verrieglungssignal, das eine Benutzung der Batterie über die aktuelle Betriebsphase hinaus verhindert und das sicherstellt, dass der Ladevorgang erst mit wieder aufgefüllten Elektrolyten ausgeführt wird.

Ferner erfasst die Batteriesteuereinheit 16 die jeweilig durchlaufenen Lade/Entladezyklen der Batterie und bewertet diese nach Kriterien des Energiedurchsatzes und der Zeitdauer für eine Nachladung. Auf diese Weise kann die Batteriesteuereinheit 16 sehr zuverlässig erkennen, ob die Batterie einem Zwischenladungsvorgang unterzogen wurde. Die Anzahl der aufeinander folgenden Zwischenladungen wird in einem Zwischenladungszähler hochgezählt. Erst bei einer vollständigen Ladung der Batterie wird der Zwischenladungszähler zurückgesetzt.

Nach Erreichen eines festgelegten, benutzerseitig vorgebbaren Grenzwertes erzeugt die Batteriesteuereinheit ein Verrieglungssignal, welches in der Batteriesteuereinheit 16 gespeichert wird und einen Zeitzähler aufweist, der das Fahrzeug zu einem vorbestimmen Zeitpunkt, beispielsweise am Ende der laufenden Betriebsphase, oder zu einem vorbestimmten Zeitpunkt stilllegt. Das Verriegelungssignal verhindert eine weitere Stromentnahme aus der Batterie, bis ein vollständig durchgeführter Ladezyklus für eine ausreichende Ladung sorgt, erst dann hebt die Batteriesteuereinheit das Verriegelungssignal auf.

Fig. 2 zeigt die Abhängigkeit des Nennstroms I_{Nenn} von der Temperatur der Batterie T. Der Nennstrom aus der Kennlinie 40 gibt an, welcher Strom der Batterie bei welcher Temperatur entnommen werden kann. Der Kennlinie ist deutlich zu entnehmen, dass bis zu einem Temperaturwert T₁ bei optimalem Füllstand der Batterie ein konstanter Nennstrom entnommen werden kann. Ausgehend von der Temperatur T₁ sinkt der zu entnehmende Nennstrom bis zum Erreichen einer Temperaturwerts T₂ ab. Für Temperaturen größer als die Temperatur T₂ kann kein Nennstrom aus der Batterie entnommen werden.

Verschlechtert sich der Füllstand der Batterie, d.h. die Batterie ist beispielsweise nicht vollständig gefüllt, so verändern sich die Werte für den Nennstrom. In Kennlinie 42 sind die Werte für den Nennstrom bei minimalem Füllstand der Batterie hergestellt. Deutlich zu erkennen ist, dass hierbei ein geringerer Nennstrom der Batterie entnommen werden kann. Wie auch bei optimalem Füllstand der Batterie liegt bis zu einem Temperaturwert T₃ ein konstanter verminderter Nennstrom vor. Für Temperaturen oberhalb von T₃ wird der Nennstrom darüber hinaus reduziert und endet bei einer Temperatur T₄ mit Wert Null.

Für den Betrieb des Flurförderzeugs wird abhängig vom gemessenen Füllstand und dem gemessenen Temperaturwert anhand der Kennlinien ein Nennstrom I_{Nenn} bestimmt, der maximal der Batterie entnommen werden kann. Für Füllstände, die zwischen dem optimalen Füllstand und dem minimalen Füllstand liegen, sind weitere Kennlinien vorgesehen, die in Fig. 2 nicht eingezeichnet sind.

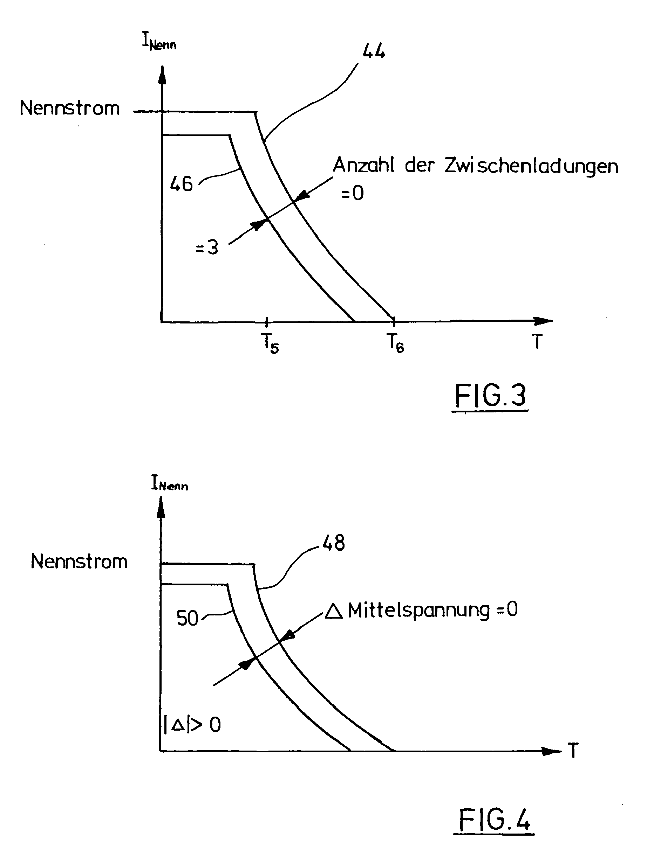

Fig. 3 zeigt die Abhängigkeit des Nennstroms abhängig von der Anzahl der Zwischenladungen. Wurde der letzte Ladevorgang vollständig abgeschlossen, so ist die Anzahl der Zwischenladungen gleich Null und der der Batterie zu entnehmende Nennstrom folgt der Kennlinie 44. Auch die Kennlinie 44 besitzt einen erstes Temperaturintervall bis zu einer Temperatur T₅, in dem der Nennstrom unabhängig von der Temperatur konstant ist. Überschreitet die Temperatur den Temperaturwert T₅, so fällt der Nennstrom ab, bis bei Temperaturen oberhalb von T₆ der Nennstrom der Batterie sich zu Null ergibt. Mit zunehmender Anzahl der Zwischenladungen werden schrittweise die Werte für den Strom reduziert, wobei hierbei auch die Temperaturgrenzen, innerhalb derer der Strom konstant ist, reduziert werden. Nicht in der Fig. 3 dargestellt ist, dass ab einer Grenze von erfolgten Zwischenladungen der Nennstrom zu Null gesetzt werden kann und eine weitere Benutzung der Batterie unterbunden ist. Fig. 3 mit der Kennlinie 46 zeigt beispielsweise den Verlauf des Nennstroms für drei Zwischenladungen.

Fig. 4 zeigt die Abhängigkeit des Nennstroms I_{Nenn} von dem Betrag einer an der Batterie abgegriffenen Mittelspannung. Ist die Mittelspannung ungefähr gleich Null, so ergibt sich der Nennstrom der Kennlinie 48 abhängig von der Temperatur T. Nimmt der Betrag der Mittelspannung zu, so wird bis zu einem Maximalwert der Mittelspannung der Strom reduziert und verläuft beispielsweise gemäß der Kennlinie 50.

Bei dem erfindungsgemäßen Verfahren können die Kennlinienfelder gemäß Fign. 2, 3 und 4 einzeln in der Steuereinheit vorgesehen sein. Es ist aber auch möglich, mehrere Kennfelder in der Steuereinheit vorzusehen und mehrere Werte für den Nennstrom zu bestimmen. Der gültige Nennstrom, der dann den maximalen Entnahmestrom der Batterie angibt, ergibt sich dann beispielsweise als das Minimum der ermittelten Nennströme.

## Patentansprüche

1. Verfahren zum Betreiben eines Flurförderzeugs (36) mit einer Batterieeinheit, die eine Steuereinheit und mindestens einen Sensor zur Erfassung einer Zustandsgröße der Batterieeinheit aufweist,
**dadurch gekennzeichnet, dass**
- die Steuereinheit (16) mindestens einen Messwert eines Sensors ausliest und
- unter Verwendung des Messwertes einen Kennwert bestimmt, der für einen an die Batterieeinheit angeschlossenen Verbraucher einen maximalen Entnahmestrom und/oder für ein an die Batterieeinheit angeschlossenes Ladegerät einen maximalen Ladestrom angibt.

2. Verfahren nach Anspruch 1, **dadurch gekennzeichnet, dass** die Steuereinheit mindestens zwei Sensoren aufweist, deren Messwerte ausgelesen werden und aus deren Messwerten jeweils eine Zustandsgröße bestimmt wird, wobei der Kennwert aus mindestens zwei Zustandsgrößen bestimmt wird.

3. Verfahren nach Anspruch 2, **dadurch gekennzeichnet, dass** ein erster Sensor als Temperatursensor aufgebildet ist, der die Temperatur der Batterie misst.

4. Verfahren nach Anspruch 3, **dadurch gekennzeichnet, dass** der Kennwert abhängig von der gemessenen Temperatur und mindestens einer weiteren Zustandsgröße bestimmt wird.

5. Verfahren nach Anspruch 4, **dadurch gekennzeichnet, dass** als weitere Zustandsgröße der Füllstand der Batterie herangezogen wird, wobei mit zunehmender Reduzierung des Füllstands der Batterie der Kennwert anzeigt, dass der maximale Entnahmestrom und/oder der maximale Ladestrom zu reduzieren ist.

6. Verfahren nach Anspruch 4 oder 5, **dadurch gekennzeichnet, dass** als weitere Zustandsgröße die Zwischenspannung herangezogen wird, wobei mit zunehmendem Betrag der Zwischenspannung der Kennwert anzeigt, dass der maximale Entnahmestrom und/oder der maximale Ladestrom zunehmend zu reduzieren ist.

7. Verfahren nach einem der Ansprüche 4 bis 6, **dadurch gekennzeichnet, dass** als weitere Zustandsgröße die Anzahl der Zwischenladungen der Batterie herangezogen wird, wobei mit zunehmender Anzahl an Zwischenladungen der Kennwert anzeigt, dass der maximale Entnahmestrom und/oder der maximale Ladestrom zu reduzieren ist.

8. Verfahren nach einem der Ansprüche 2 bis 7, **dadurch gekennzeichnet, dass** für die Temperatur der Batterie ein Maximalwert vorgesehen ist, bei dessen Überschreiten der Kennwert anzeigt, dass keine Ladung und/oder Entnahme zu erfolgen hat.

9. Verfahren nach einem der Ansprüche 2 bis 8, **dadurch gekennzeichnet, dass** für die weitere Zustandsgröße ein vorbestimmter Grenzwert definiert ist, bei dessen Überschreiten der Kennwert anzeigt, dass keine Ladung und/oder Entnahme von Strom aus der Batterie zu erfolgen hat.

10. Verfahren nach einem der Ansprüche 8 oder 9, **dadurch gekennzeichnet, dass** die Steuereinheit ein Fehlersignal generiert, wenn der Maximalwert der Temperatur und/oder der Grenzwert der weiteren Zustandsgröße überschritten wird, und das Fehlersignal an ein mit der Batterieeinheit verbundenes Ladegerät und/oder Flurförderzeug übertragen und von diesem angezeigt wird.

11. Verfahren nach Anspruch 10, **dadurch gekennzeichnet, dass** ansprechend auf das Fehlersignal das Flurförderzeug zu einer definierten Zeit stillgelegt wird.

12. Verfahren nach einem der Ansprüche 2 bis 10, **dadurch gekennzeichnet, dass** die Steuereinheit die erfasste Temperatur der Batterie mit einem vorbestimmten Minimalwert vergleicht und bei Unterschreiten des vorbestimmten Minimalwertes einen Kennwert für einen erhöhten Ladestrom eines angeschlossenen Ladegeräts generiert.

13. Verfahren nach einem der Ansprüche 1 bis 12, **dadurch gekennzeichnet, dass** die Steuereinheit den gemessenen Spannungswert mit einem zweiten Grenzwert (G2) vergleicht und bei Überschreiten des zweiten Grenzwertes (G2) einen Kennwert generiert, der einem Ladegerät einen zusätzlichen Ladebedarf anzeigt.

14. Verfahren nach Anspruch 13, **dadurch gekennzeichnet, dass** das Ladegerät für den zusätzlichen Ladebedarf die Batterieeinheit für eine vorbestimmte Zeitdauer mit einem konstanten Ladestrom beaufschlagt.

15. Verfahren nach einem der Ansprüche 1 bis 14, **dadurch gekennzeichnet, dass** während eines Ladevorganges der eingebrachte Ladestrom und/oder die Ladespannung erfasst wird, und dass die Steuereinheit aus den erfassten Werten bestimmt, ob ein vollständiger Ladevorgang oder ein Zwischenladevorgang durchgeführt wurde.

16. Verfahren nach Anspruch 15, **dadurch gekennzeichnet, dass** die Steuereinheit einen Zähler aufweist, in dem die Anzahl der Zwischenladevorgänge seit dem letzten vollständigen Ladevorgang gezählt wird, und die Steuereinheit den Zähler wieder zurücksetzt, wenn ein Ladevorgang vollständig durchgerührt wurde.
